# FASCICULE DE BREVET EUROPEEN

(11) **EP 3 192 711 B1**
(45) Date de publication et mention de la délivrance du brevet: **14.11.2018**
(21) Numéro de dépôt: 17150216.4
(22) Date de dépôt: 04.01.2017
(51) Int. Cl.: B60S 1/38

(54) **EMBOUT D'EXTRÉMITÉ POUR UN BALAI D'ESSUIE-GLACE DE VÉHICULE**
ENDKAPPE FÜR EINEN FAHRZEUGSCHEIBENWISCHER
END-CAP FOR A VEHICLE WINDSCREEN WIPER

(30) Priorité: 15.01.2016 FR 1650311
(43) Date de publication de la demande: 19.07.2017
(73) Titulaire: Valeo Systèmes d'Essuyage, 78322 Le Mesnil Saint Denis (FR)
(72) Inventeur: JOMARD, Olivier, 63170 AUBIERE (FR)
(74) Mandataire: Callu-Danseux, Violaine

(56) Documents cités:
- FR-A1- 3 013 288
- JP-Y1- S5 149 695
- US-A1- 2013 269 142
- US-B1- 6 591 443

## Description

La présente invention concerne un embout d'extrémité pour un balai d'essuie-glace de véhicule, en particulier automobile, et un balai d'essuie-glace de véhicule comportant un tel embout.

Le document US 2013/369142 A1 divulgue un embout selon le préambule de la revendication 1.

Il est connu de chauffer un balai d'essuie-glace de véhicule automobile, en particulier pour le dégivrer en hiver. Dans le cas où ce balai est équipé de canaux internes de distribution de liquide lave-glace, le chauffage du balai permet en outre de chauffer le liquide avant sa pulvérisation sur le pare-brise du véhicule, ce qui facilite le dégivrage du pare-brise et peut éviter ainsi l'utilisation d'une raclette à givre manuelle.

Typiquement, un balai d'essuie-glace du type « balai plat » comprend un corps longitudinal portant une lame d'essuyage, en général en caoutchouc, destinée à frotter contre le pare-brise du véhicule pour évacuer de l'eau en l'amenant en dehors du champ de vision du conducteur. Le balai comporte en outre au moins une vertèbre longitudinale qui confère un cintrage à la lame d'essuyage, de manière à favoriser l'application de cette lame sur le pare-brise. Le balai est porté par un bras qui est entraîné par un moteur dans un mouvement de va-et-vient angulaire. Les moyens de liaison du balai au bras comprennent en général un connecteur qui est solidaire du corps et un adaptateur qui est articulé sur le corps et fixé à une extrémité du bras.

Dans la technique actuelle, les moyens de chauffage d'un balai d'essuie-glace comprennent en général un conducteur électrique chauffant du type résistif.

On a déjà proposé d'équiper la vertèbre de cintrage d'un balai avec des moyens de chauffage, ces moyens de chauffage se présentant sous la forme d'un film qui est rapporté et collé sur la vertèbre et qui inclut un circuit ou une piste d'un conducteur électrique chauffant. Dans la technique actuelle, le conducteur électrique chauffant du circuit forme une boucle dont les extrémités sont reliées à des bornes d'alimentation électrique.

Ces bornes sont situées dans une partie médiane de la vertèbre et sont destinées à être raccordées à des moyens de connexion électrique intégrés au connecteur précité. Ce connecteur, appelé aussi connecteur « mécanique » du fait de sa coopération mécanique avec l'adaptateur notamment, est destiné à coopérer avec un autre connecteur, appelé connecteur « électrique », qui est lui-même relié à une source de courant du véhicule.

On comprend dès lors que, dans la technique actuelle, l'alimentation électrique d'un balai d'essuie-glace est réalisée depuis les moyens de liaison du balai au bras, ce qui présente des inconvénients.

Les moyens de liaison, et en particulier le connecteur, intègrent des moyens de connexion électrique ce qui le rend complexe à réaliser et donc coûteux. Cela est accentué lorsque le connecteur intègre en plus des moyens de connexion hydraulique, destinés à coopérer avec un autre connecteur, appelé connecteur « hydraulique », pour l'alimentation en liquide lave-glace du balai.

L'invention propose un perfectionnement à la technologie décrite ci-dessus, qui est solution simple, efficace et économique.

L'invention propose un embout d'extrémité pour un balai d'essuie-glace de véhicule, en particulier automobile, comprenant un corps définissant un logement de réception d'au moins un élément dudit balai, caractérisé en ce qu'il comprend en outre des moyens de connexion électrique.

La connexion électrique est ainsi déportée sur l'embout d'extrémité, c'est-à-dire à une extrémité longitudinale du balai. Cette solution peut présenter plusieurs avantages : elle limite les problématiques de place pour intégrer la connexion électrique au milieu du balai, et plus exactement au niveau du connecteur ; l'intégration de la connexion électrique à l'embout d'extrémité évite le développement et l'ajout de pièces supplémentaires.

L'invention est applicable à un embout d'extrémité pour tout type de balai d'essuie-glace, tel qu'un balai d'essuie-glace d'une vitre avant ou arrière d'un véhicule. Cet embout peut ou non avoir un profil aérodynamique.

L'embout selon l'invention peut comprendre une ou plusieurs des caractéristiques suivantes, prises isolément les unes des autres ou en combinaison les unes avec les autres :
- lesdits moyens de connexion électrique sont au moins en partie intégrés audit corps ou formés d'une seule pièce avec ledit corps,
- lesdits moyens de connexion électrique comprennent des fiches de connexion électrique configurées pour être connectées à des fiches complémentaires d'un connecteur électrique d'alimentation du balai,
- lesdites fiches de connexion électrique sont configurées pour coopérer par emboîtement avec ledit connecteur électrique,
- l'embout comprend des moyens de fixation configurés pour coopérer avec ledit connecteur électrique,
- lesdits moyens de fixation sont configurés pour coopérer par encliquetage élastique avec ledit connecteur électrique,
- lesdits moyens de connexion électrique sont configurés pour être raccordés électriquement à un conducteur dudit au moins un élément,
- lesdits moyens de connexion électrique sont configurés pour être raccordés électriquement à un conducteur électrique chauffant en matériau résistif dudit au moins un élément, et
- ledit corps présente au moins une surface aérodynamique,

L'invention concerne également un kit pour balai d'essuie-glace de véhicule, en particulier automobile, comportant au moins un embout tel que décrit ci-dessus, et au moins une vertèbre longitudinale de rigidification dont une extrémité longitudinale est engagée ou configurée pour être engagée dans ledit logement de l'embout.

Il est ainsi envisageable de remplacer une vertèbre et un embout d'un balai de la technique antérieure par ceux du kit. Ce remplacement peut être permanent ou provisoire. Un remplacement provisoire est en effet envisageable dans le cas par exemple où un utilisateur souhaiterait équiper un balai d'essuie-glace d'un véhicule avec une vertèbre chauffante pour dégivrer le pare-brise du véhicule.

Le kit selon l'invention peut comprendre une ou plusieurs des caractéristiques suivantes, prises isolément les unes des autres ou en combinaison les unes avec les autres :
- ladite vertèbre porte des moyens de chauffage, réalisés sous forme de conducteur électrique chauffant, dont des bornes d'alimentation sont situées au niveau de ladite extrémité longitudinale et sont raccordées ou configurées pour être raccordées auxdits moyens de connexion de l'embout,
- le kit comprend un câble de raccordement électrique dont une première extrémité est raccordée ou configurée pour être raccordée auxdits moyens de connexion électrique de l'embout, et
- une seconde extrémité dudit câble est raccordée à un organe de connexion configuré pour être enfiché dans une prise d'allume-cigare de véhicule, ou à un boîtier de commande permettant une alimentation à distance.

La présente invention concerne également un balai d'essuie-glace pour un véhicule, en particulier automobile, comportant au moins un embout tel que décrit ci-dessus.

Avantageusement, le balai comporte une vertèbre longitudinale de rigidification dont une extrémité longitudinale est engagée dans ledit logement de l'embout, ladite vertèbre portant des moyens de chauffage, réalisés sous forme de conducteur électrique chauffant, dont des bornes d'alimentation sont situées au niveau de ladite extrémité longitudinale et raccordées auxdits moyens de connexion électrique de l'embout.

L'invention sera mieux comprise et d'autres détails, caractéristiques et avantages de l'invention apparaîtront à la lecture de la description suivante faite à titre d'exemple non limitatif et en référence aux dessins annexés, dans lesquels :
- la figure 1 est une vue schématique en perspective d'un système d'essuyage pour une vitre d'un véhicule automobile selon l'art antérieur ;
- la figure 2 est une vue détaillée de la figure 1, montrant la liaison entre le balai d'essuie-glace et le bras d'entraînement ;
- la figure 3 est une vue éclatée de la liaison de la figure 2 ;
- la figure 4 est une vue en perspective éclatée d'un balai d'essuie-glace de véhicule automobile selon l'invention ;
- la figure 5 est une vue schématique en perspective d'un embout d'extrémité selon l'invention ;
- les figures 6 et 7 sont des vues schématiques en perspective d'une vertèbre de rigidification et d'un câble pour un kit selon l'invention.

Il faut noter que les figures exposent l'invention de manière détaillée pour mettre en oeuvre l'invention, lesdites figures pouvant bien entendu servir à mieux définir l'invention le cas échéant.

Dans la description qui suit, les dénominations longitudinales ou latérales se réfèrent à l'orientation du balai d'essuie-glace selon l'invention. La direction longitudinale correspond à l'axe principal du balai dans lequel il s'étend, alors que les orientations latérales correspondent à des droites concourantes, c'est-à-dire qui croisent la direction longitudinale, notamment perpendiculaires à l'axe longitudinal du balai dans son plan de rotation. Pour les directions longitudinales, les dénominations haute ou basse s'apprécient par rapport au point de fixation du balai sur le bras, la dénomination intérieure correspondant à la partie où le bras et un demi-balai s'étendent.

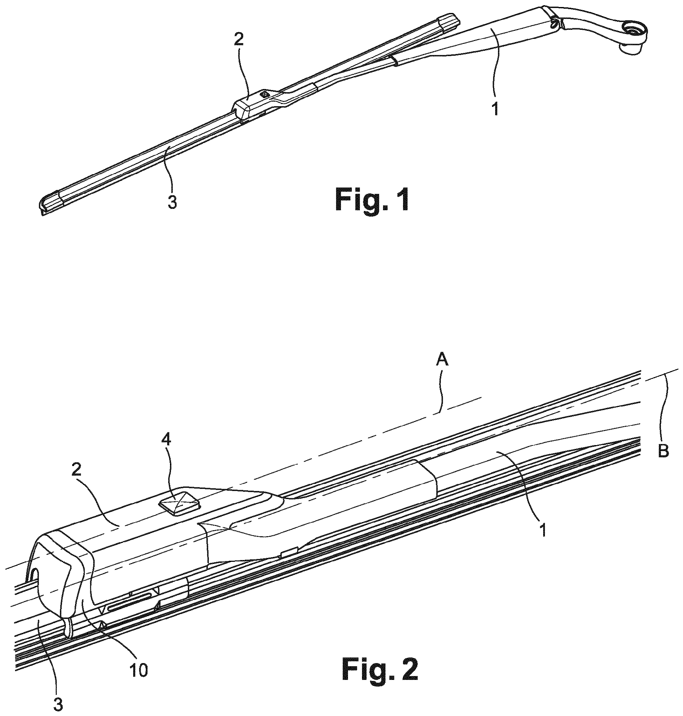

En se référant aux figures 1 et 2, on voit un système d'essuyage composé d'un bras 1 se prolongeant à son extrémité extérieure par une pièce terminale 2, qui est fixée par exemple par un sertissage sur le bras 1. La pièce terminale 2 recouvre un adaptateur porteur du balai 3 par l'intermédiaire d'un connecteur mécanique 10. L'adaptateur a vocation à s'insérer dans la pièce terminale 2 par un mouvement de translation selon une première direction longitudinale A de la pièce terminale 2, pour venir dans la position d'utilisation autrement appelé position de fonctionnement, où il est positionné en butée contre une forme coopérante donnée à la pièce terminale 2. Il y est alors fixé de façon réversible au moyen d'un bouton escamotable de verrouillage 4, qui coopère avec un orifice pratiqué à cet effet dans la partie supérieure de la pièce terminale. Le balai s'étend longitudinalement selon une deuxième direction longitudinale référencée B.

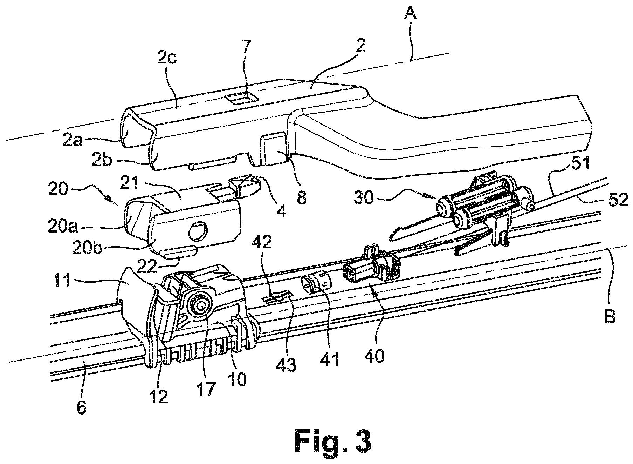

En se référant maintenant à la figure 3, on voit le détail des éléments assurant le rattachement du balai 3 au bras 1.

La pièce terminale 2 présente une forme en « U » renversé où l'ouverture de cette forme en « U » fait face au vitrage. Cette pièce terminale 2 comprend une base 2c à la partie supérieure et deux branches latérales 2a et 2b s'étendant en direction du vitrage. Sur la base 2c est pratiqué un orifice 7 dans lequel vient se loger le bouton escamotable de verrouillage 4 issu de l'adaptateur 20. La tranche inférieure de chaque branche latérale comprend un bord plié à 90° en direction du volume interne défini par la base 2c et les branches 2a et 2b, qui a pour fonction d'une part de guider longitudinalement l'introduction de l'adaptateur 20 et d'autre part, de servir de butée en translation à des butées correspondantes placées sur l'adaptateur 20. Sur au moins une des branches latérales 2a ou 2b de la pièce terminale 2 est fixé un moyen de retenue 8 dont la fonction est de retenir le connecteur électrique directement, ou indirectement via un support 30. Le moyen de retenue 8 bloque une translation du connecteur électrique 40 lors du retrait du balai 3 pour le maintenir dans le volume interne de la pièce terminale 2, ce qui sera décrit en détail plus loin. Avantageusement, un moyen de retenue 8 est solidarisé sur chacune des branches latérales 2a et 2b constitutives de la pièce terminale 2. Dans une telle situation, la partie terminale 2 comporte deux moyens de retenue 8 opposés l'un à l'autre.

L'adaptateur 20 présente une forme en chape, complémentaire au volume interne de la pièce terminale 2, de sorte à venir se loger dans cette dernière. Deux parois latérales 20a et 20b sont jointes par un pont 21 et comprennent chacune à leurs extrémités libres un rebord 22 plié vers l'extérieur de l'adaptateur. Ces rebords 22 forment une butée de translation quand ils viennent en appui contre les bords pliés des branches latérales de la pièce terminale 2. Cet adaptateur 20 comprend également deux trous pratiqués au travers des parois latérales 20a et 20b et présentant un axe confondu, destiné à servir d'axe de rotation entre le balai 3 et le bras 1 pour autoriser une liberté en rotation entre le bras 1 et le balai 3 quand le système d'essuyage opère des mouvements de va-et-vient. Ceci permet au balai 3 de suivre la courbure du vitrage à essuyer.

Le connecteur mécanique 10 est solidarisé de manière indémontable sur le balai 3 de façon à assurer la transmission de l'effort mécanique en provenance du bras 1 vers le balai 3. Il présente une forme sensiblement parallélépipédique s'étendant dans la deuxième direction longitudinale B du balai 3, avec deux flancs latéraux desquels s'étendent latéralement deux tourillons ou arbre 17 qui ont pour fonctions, d'une part, de solidariser le connecteur mécanique sur l'adaptateur 20 et, d'autre part, de servir, par leur coopération avec les trous pratiqués dans les parois latérales 20a et 20b de l'adaptateur, d'axe pour la rotation du balai 3 par rapport au bras 1.

Du côté extérieur, le connecteur mécanique présente une paroi 11, dénommée casquette, qui, en premier lieu, ferme la partie avant de la pièce terminale 2 et joue un rôle d'écran pour protéger les composants contenus à l'intérieur de cette pièce terminale 2 et, en second lieu, assure une finition extérieure de bonne facture. La face opposée à la casquette 11 du connecteur mécanique 10, dite face intérieure, comporte des orifices (non visibles) de connexion électrique apte à recevoir le connecteur électrique 40.

Cette face intérieure du connecteur mécanique 10 comprend encore un ou des orifices d'entrée hydraulique prolongés par des canaux internes de distribution du liquide lave-vitre. Ces canaux de distribution (non représentés sur les figures) s'étendent à l'intérieur du connecteur mécanique 10 pour déboucher au droit de conduits d'alimentation 12 formés dans le connecteur mécanique 10 et ainsi alimenter des tubes de pulvérisation 6 du liquide par le balai. Ces tubes s'étendent le long des deux bords du balai 3 afin de projeter du liquide lave-vitre lors de l'aller et lors du retour du balai. Ces caractéristiques relatives à la projection du liquide lave-vitre sont globalement appelées dispositif de pulvérisation de liquide lave-vitre, pour le cas où le balai d'essuie-glace serait raccorder à un système de projection de liquide lave-vitre.

Les orifices d'entrée hydraulique délimitent des canaux internes au connecteur mécanique, ces canaux ayant également pour fonction d'accueillir le support 30 pour le maintenir en position dans le connecteur mécanique 10.

Les orifices d'entrée électrique délimitent des conduits internes au connecteur mécanique 10, ces conduits ayant pour fonction d'accueillir le connecteur électrique 40 et assurer le raccordement électrique entre le réseau électrique du véhicule et le balai 3.

Ces conduits internes contiennent des fiches mâles 42 et 43 sur lesquelles des cosses femelles portées par le connecteur électrique 40 viennent s'emboîter. Cette connexion électrique apporte la puissance électrique nécessaire au fonctionnement de l'élément chauffant intégré au balai.

Ce connecteur électrique 40 reçoit deux câbles électriques 51 et 52 par lesquels chemine le courant électrique en provenance du réseau électrique du véhicule. Ces câbles 51 et 52 sont rassemblés pour former un faisceau qui s'étend dans le volume interne de la pièce terminale 2 et sous le bras.

Le connecteur électrique 40 reçoit également un dispositif d'étanchéité 41 enfilé sur le corps. Ce dispositif d'étanchéité 41 assure l'étanchéité de la liaison électrique entre le connecteur électrique 40 et le connecteur mécanique 10.

La technologie des figures 1 à 3 présente des inconvénients décrits plus haut.

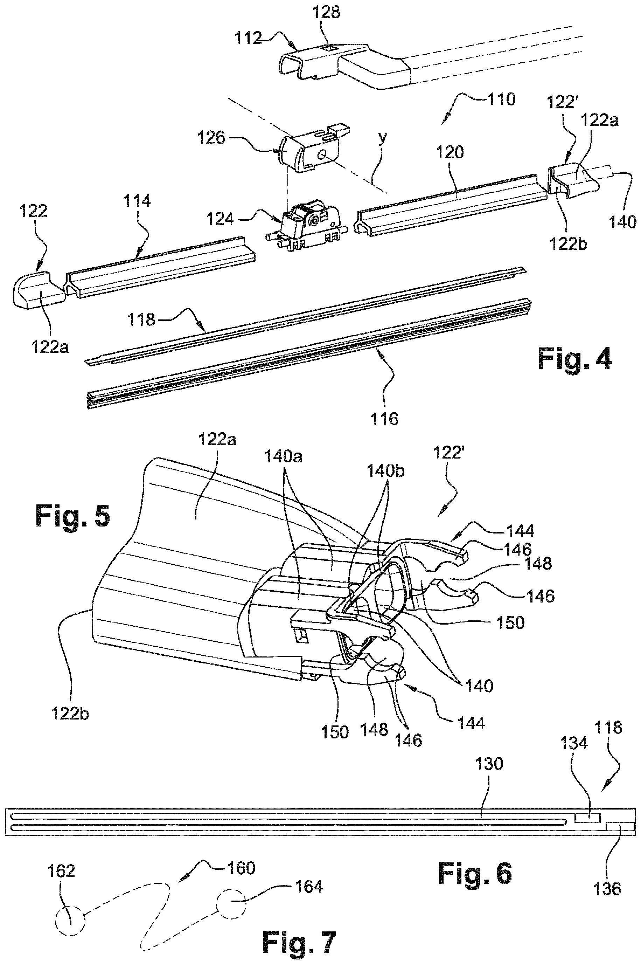

La figure 4 illustre le principe général de l'invention et les figures 5 à 7 illustrent un mode de réalisation de l'invention.

Il est illustré à la figure 4 un balai d'essuie-glace 110 d'un pare-brise de véhicule automobile et un bras 112 d'entraînement de ce balai 110, ce bras 112 étant partiellement représenté et destiné à être entraîné par un moteur pour que le balai suive un mouvement angulaire de va-et-vient permettant d'évacuer l'eau et éventuellement d'autres éléments indésirables recouvrant le pare-brise.

Le balai 110 comprend ici un corps longitudinal 114, une lame d'essuyage 116, en général en caoutchouc, et au moins une vertèbre 118 qui confère un cintrage à la lame 116 de manière à favoriser l'application de cette lame sur le pare-brise.

Le corps 114 du balai 110 comporte un déflecteur supérieur 120 destiné à améliorer le fonctionnement du balai, le but de ce déflecteur 120 étant d'améliorer le plaquage du balai sur le pare-brise et donc la performance aérodynamique du système.

Le balai 110 comprend en outre des embouts d'extrémité 122, 122' pour l'accrochage de la lame 116 et de la vertèbre 118 sur le corps. Ces embouts 122, 122' sont situés à chacune des extrémités longitudinales du corps 114. Chaque embout 122, 122' comprend un corps définissant un logement 122b de réception de la lame 116 et/ou de la vertèbre 118. De plus, dans l'exemple représenté, chaque embout 122,122' présente au moins une surface aérodynamique 122a.

Le corps 114 du balai est ici réalisé en deux parties indépendantes qui sont disposées sensiblement bout à bout et raccordées l'une à l'autre par un connecteur 124 intermédiaire.

Pour assurer son montage sur le bras 112, le balai 110 comprend un adaptateur 126 monté sur le connecteur 124 et permettant une articulation du balai 110 par rapport au bras 112. L'articulation du balai 110 par rapport au bras 112 est une articulation selon un mouvement de rotation autour d'un axe de rotation Y perpendiculaire à l'axe longitudinal du balai 110. Le balai 110 doit en effet présenter au moins un degré de liberté en rotation par rapport au bras 112, et plus spécifiquement par rapport à une pièce terminale 128 du bras 112, pour permettre au balai 110 de suivre la courbure du pare-brise.

Le balai est de préférence du type comportant un élément chauffant, cet élément chauffant comportant un circuit ou une piste d'un conducteur électrique chauffant et un support de ce circuit.

Le support du circuit est la vertèbre 118 ou une des vertèbres du balai dans l'exemple représenté. Une vertèbre 118, par exemple métallique, a une forme allongée. Une vertèbre 118 a en général en section une forme sensiblement rectangulaire et comprend deux surfaces planes sensiblement parallèles respectivement supérieure et inférieure.

La figure 6 représente un mode de réalisation de la vertèbre 118. Une des surfaces planes de cette vertèbre 118 est recouverte d'un conducteur électrique chauffant 130. Le conducteur électrique chauffant est en général en acier inoxydable ou en alliage à base de cuivre, nickel, aluminium, etc. (cupro, laiton, etc.).

Le conducteur électrique chauffant 130 comprend ici une boucle dont les extrémités sont reliées respectivement à deux bornes, respectivement positive 134 et négative 136, d'alimentation électrique.

Les bornes 134, 136 sont situées au niveau d'une des extrémités longitudinales de la vertèbre 118, de façon à pouvoir coopérer avec des moyens de connexion électrique d'un des embouts 122, 122', et en particulier l'embout électrique 122' dont un mode de réalisation est représenté à la figure 5.

Dans l'exemple de réalisation de la figure 5, les moyens de connexion électrique sont intégrés au corps de l'embout 122'. Les moyens de connexion électrique 140 comprennent des fiches 140 de connexion électrique configurées pour être connectées, ici par emboîtement, à des fiches complémentaires d'un connecteur électrique d'alimentation du balai, similaire par exemple à celui 40 de la figure 3.

Les fiches 140 peuvent comprendre une partie 140a non conductrice, par exemple plastique, qui est formée d'une seule pièce avec le corps de l'embout 122', et une partie 140b conductrice, par exemple métallique - du type cosse, logée ou noyée en partie dans la première partie.

Les fiches 140 sont orientées dans une direction correspondant à la direction souhaitée d'emboîtement avec le connecteur électrique. Dans l'exemple représenté, cette direction est inclinée par rapport à l'axe longitudinal du balai ou de la vertèbre.

L'embout 122' comprend des moyens de fixation 144 configurés pour coopérer avec le connecteur électrique. Dans l'exemple représenté, ces moyens de fixation sont configurés pour coopérer par encliquetage élastique avec le connecteur électrique. Ils comprennent ici deux pattes latérales 146 sensiblement parallèles et élastiquement déformables. Chaque patte 146 comprend un orifice 148 traversant de montage d'un pion de forme complémentaire du connecteur électrique, et une encoche 150 débouchant dans l'orifice pour le passage du pion jusqu'à l'orifice. L'encoche 148 et l'orifice 150 de chaque patte séparent cette patte en deux portions qui sont élastiquement déformables par écartement l'une de l'autre, pour autoriser le passage précité.

Bien que cela ne soit pas visible dans les dessins, les moyens de connexion de l'embout 122' sont configurés pour être raccordés électriquement aux bornes 134, 136 du circuit 130 de la vertèbre 118 et comprennent par exemple, dans le logement 122b précité de l'embout 122', des pattes métalliques de raccordement électrique, connectées aux parties conductrices 140b des fiches 140, et destinées à coopérer par glissement et contact avec les bornes 134, 136 de la vertèbre 118 lors du montage de l'extrémité de la vertèbre dans le logement 122b de l'embout.

L'invention concerne notamment l'embout 122' en tant que tel mais aussi un kit pour balai d'essuie-glace comportant au moins un embout 122' de ce type et au moins une vertèbre 118, de préférence chauffante.

Il est envisageable que l'embout 122' soit prémonté sur la vertèbre 118. La liaison électrique entre les bornes 134, 136 du circuit de la vertèbre et les moyens de connexion de l'embout 122' pourrait donc être du type permanent. Pour cela, les pattes des moyens de connexion de l'embout peuvent être soudées sur les bornes 134, 136 du circuit 130 de la vertèbre.

Avantageusement, ce kit comprend un câble 160 d'alimentation électrique, visible en figure 7, dont une extrémité 162 est raccordée ou configurée pour être raccordée aux moyens de connexion de l'embout. Le câble et l'embout peuvent également être pré-assemblés. La seconde extrémité 164 du câble peut être raccordée à un organe de connexion configuré pour être enfiché dans une prise d'allume-cigare de véhicule. Cette extrémité peut également être raccordée à un organe de connexion à la batterie du véhicule ou à un boîtier de commande permettant une alimentation à distance.

Par temps froid, un utilisateur peut ainsi monter de façon temporaire le kit sur un balai d'essuie-glace, en remplaçant la vertèbre et un embout de ce balai par ceux du kit, puis en branchant le câble relié à l'embout sur la prise d'allume-cigare du véhicule ou le boîtier de commande. Après chauffage du balai, celui-ci peut être déplacé sur le pare-brise pour le dégivrer. Le kit peut ensuite être démonté et rangé avant sa prochaine utilisation.

## Revendications

1. Embout d'extrémité (122') pour un balai (110) d'essuie-glace de véhicule, en particulier automobile, comprenant un corps définissant un logement (122b) de réception d'au moins un élément (118, 120) dudit balai, **caractérisé en ce qu'**il comprend en outre des moyens de connexion électrique (140).

2. Embout (122') selon la revendication précédente, dans lequel lesdits moyens de connexion électrique (140) sont au moins en partie intégrés audit corps ou formés d'une seule pièce avec ledit corps.

3. Embout (122') selon la revendication 1 ou 2, dans lequel lesdits moyens de connexion électrique (140) comprennent des fiches de connexion électrique configurées pour être connectées à des fiches complémentaires d'un connecteur électrique d'alimentation du balai.

4. Embout (122') selon la revendication précédente, dans lequel lesdites fiches de connexion électrique sont configurées pour coopérer par emboîtement avec ledit connecteur électrique.

5. Embout (122') selon la revendication 3 ou 4, dans lequel il comprend des moyens de fixation (144) configurés pour coopérer avec ledit connecteur électrique.

6. Embout (122') selon la revendication précédente, dans lequel lesdits moyens de fixation (144) sont configurés pour coopérer par encliquetage élastique avec ledit connecteur électrique.

7. Embout (122') selon l'une des revendications précédentes, dans lequel lesdits moyens de connexion électrique (140) sont configurés pour être raccordés électriquement à un conducteur (130) dudit au moins un élément (118).

8. Embout (122') selon la revendication précédente, dans lequel lesdits moyens de connexion électrique (140) sont configurés pour être raccordés électriquement à un conducteur électrique chauffant (130) en matériau résistif dudit au moins un élément (118).

9. Embout (122') selon l'une des revendications précédentes, dans lequel ledit corps présente au moins une surface aérodynamique (122a).

10. Kit pour balai (110) d'essuie-glace de véhicule, en particulier automobile, comportant au moins un embout (122') selon l'une des revendications précédentes, et au moins une vertèbre longitudinale (118) de rigidification dont une extrémité longitudinale est engagée ou configurée pour être engagée dans ledit logement (122b) de l'embout.

11. Kit selon la revendication précédente, dans lequel ladite vertèbre (118) porte des moyens de chauffage, réalisés sous forme de conducteur électrique chauffant, dont des bornes d'alimentation (134, 136) sont situées au niveau de ladite extrémité longitudinale et sont raccordées ou configurées pour être raccordées auxdits moyens de connexion électrique (140) de l'embout.

12. Kit selon la revendication 10 ou 11, comportant en outre un câble (160) de raccordement électrique dont une première extrémité (162) est raccordée ou configurée pour être raccordée auxdits moyens de connexion électrique (140) de l'embout (122').

13. Kit selon la revendication précédente, dans lequel une seconde extrémité (164) dudit câble (160) est raccordée à un organe de connexion configuré pour être enfiché dans une prise d'allume-cigare de véhicule, ou à un boîtier de commande permettant une alimentation à distance.

14. Balai d'essuie-glace de véhicule comportant au moins un embout (122') selon l'une des revendications 1 à 9.

15. Balai selon la revendication précédente, comportant une vertèbre longitudinale (118) de rigidification dont une extrémité longitudinale est engagée dans ledit logement (122b) de l'embout (122'), ladite vertèbre portant des moyens de chauffage, réalisés sous forme de conducteur électrique chauffant, dont des bornes d'alimentation (134, 136) sont situées au niveau de ladite extrémité longitudinale et raccordées auxdits moyens de connexion électrique (140) de l'embout.

## Patentansprüche

1. Endkappe (122') für einen Scheibenwischer (110) eines Fahrzeugs, insbesondere Automobils, umfassend einen Körper, der eine Aufnahme (122b) zum Aufnehmen mindestens eines Elements (118, 120) des Wischers definiert, **dadurch gekennzeichnet, dass** diese außerdem elektrische Verbindungsmittel (140) umfasst.

2. Kappe (122') nach dem vorhergehenden Anspruch, wobei die elektrischen Verbindungsmittel (140) mindestens teilweise in dem Körper integriert oder aus einem einzigen Stück mit dem Körper gebildet sind.

3. Kappe (122') nach Anspruch 1 oder 2, wobei die elektrischen Verbindungsmittel (140) elektrische Verbindungsstecker umfassen, die ausgelegt sind, mit komplementären Steckern eines elektrischen Verbinders zur Versorgung des Wischers verbunden zu werden.

4. Kappe (122') nach dem vorhergehenden Anspruch, wobei die elektrischen Verbindungsstecker ausgelegt sind, durch eine Steckkupplung mit dem elektrischen Verbinder zusammenzuwirken.

5. Kappe (122') nach Anspruch 3 oder 4, wobei diese Befestigungsmittel (144) umfasst, die ausgelegt sind, mit dem elektrischen Verbinder zusammenzuwirken.

6. Kappe (122') nach dem vorhergehenden Anspruch, wobei die Befestigungsmittel (144) ausgelegt sind, durch elastisches Einrasten mit dem elektrischen Verbinder zusammenzuwirken.

7. Kappe (122') nach einem der vorhergehenden Ansprüche, wobei die elektrischen Verbindungsmittel (140) ausgelegt sind, mit einem Leiter (130) des mindestens einen Elements (118) elektrisch verbunden zu werden.

8. Kappe (122') nach dem vorhergehenden Anspruch, wobei die elektrischen Verbindungsmittel (140) ausgelegt sind, mit einem elektrischen Heizleiter (130) aus einem widerstandfähigen Material des mindestens einen Elements (118) elektrisch verbunden zu werden.

9. Kappe (122') nach einem der vorhergehenden Ansprüche, wobei der Körper mindestens eine aerodynamische Fläche (122a) aufweist.

10. Kit für einen Scheibenwischer (110) eines Fahrzeugs, insbesondere Automobils, umfassend mindestens eine Kappe (122') nach einem der vorhergehenden Ansprüche, und mindestens eine längliche Versteifungsleiste (118), von der ein longitudinales Ende mit der Aufnahme (122b) der Kappe in Eingriff steht oder dazu ausgelegt ist, mit dieser in Eingriff zu gelangen.

11. Kit nach dem vorhergehenden Anspruch, wobei die Leiste (118) Heizmittel trägt, die in der Form eines elektrischen Heizleiters ausgeführt sind, dessen Versorgungsanschlüsse (134, 136) auf der Höhe des longitudinalen Endes angeordnet sind und mit den elektrischen Verbindungsmitteln (140) der Kappe verbunden oder dazu ausgelegt sind, mit diesen verbunden zu werden.

12. Kit nach Anspruch 10 oder 11, außerdem umfassend ein elektrisches Verbindungskabel (160), von dem ein erstes Ende (162) mit den elektrischen Verbindungsmitteln (140) der Kappe (122') verbunden oder dazu ausgelegt ist, mit diesen verbunden zu werden.

13. Kit nach dem vorhergehenden Anspruch, wobei ein zweites Ende (164) des Kabels (160) mit einem Verbindungselement verbunden ist, das ausgelegt ist, in eine Zigarettenanzünder-Steckerbuchse des Fahrzeugs eingesteckt zu werden, oder in ein Steuergehäuse, das eine Versorgung aus der Entfernung gestattet.

14. Fahrzeugscheibenwischer, umfassend mindestens eine Kappe (122') nach einem der Ansprüche 1 bis 9.

15. Wischer nach dem vorhergehenden Anspruch, umfassend eine längliche Versteifungsleiste (118), von der ein longitudinales Ende mit der Aufnahme (122b) der Kappe (122') in Eingriff steht, wobei die Leiste Heizmittel trägt, die in der Form eines elektrischen Heizleiters ausgeführt sind, dessen Versorgungsanschlüsse (134, 136) auf der Höhe des longitudinalen Endes angeordnet und mit den elektrischen Verbindungsmitteln (140) der Kappe verbunden sind.

## Claims

1. End-fitting (122') for a windscreen wiper (110) of a vehicle, in particular a motor vehicle, comprising a body defining a housing (122b) for receiving at least one element (118, 120) of said wiper, **characterized in that** it further comprises electrical connection means (140).

2. End-fitting (122') according to the preceding claim, in which said electrical connection means (140) are at least partly incorporated in said body or formed of a single piece with said body.

3. End-fitting (122') according to Claim 1 or 2, in which said electrical connection means (140) comprise contacts configured to be electrically connected to complementary contacts of an electrical power supply connector of the wiper.

4. End-fitting (122') according to the preceding claim, in which said electrical connection contacts are configured to cooperate by fitting with said electrical connector.

5. End-fitting (122') according to Claim 3 or 4, in which it comprises fixing means (144) configured to cooperate with said electrical connector.

6. End-fitting (122') according to the preceding claim, in which said fixing means (144) are configured to cooperate by elastic snap-fitting with said electrical connector.

7. End-fitting (122') according to one of the preceding claims, in which said electrical connection means (140) are configured to be electrically connected to a conductor (130) of said at least one element (118).

8. End-fitting (122') according to the preceding claim, in which said electrical connection means (140) are configured to be electrically connected to a heating electrical conductor (130) made of resistive material of said at least one element (118).

9. End-fitting (122') according to one of the preceding claims, in which said body has at least one aerodynamic surface (122a).

10. Kit for a windscreen wiper (110) of a vehicle, in particular a motor vehicle, comprising at least one end-fitting (122') according to one of the preceding claims, and at least one longitudinal stiffening spine (118) of which a longitudinal end is engaged or configured to be engaged in said housing (122b) of the end-fitting.

11. Kit according to the preceding claim, in which said spine (118) bears heating means, produced in heating electrical conductor form, of which power supply terminals (134, 136) are situated at said longitudinal end and are connected or configured to be connected to said electrical connection means (140) of the end-fitting.

12. Kit according to Claim 10 or 11, further comprising an electrical connection cable (160) of which a first end (162) is connected or configured to be connected to said electrical connection means (140) of the end-fitting (122').

13. Kit according to the preceding claim, in which a second end (164) of said cable (160) is connected to a connection member configured to be plugged into a vehicle cigarette lighter plug, or to a control module allowing remote power supply.

14. Vehicle windscreen wiper comprising at least one end-fitting (122') according to one of Claims 1 to 9.

15. Blade according to the preceding claim, comprising a longitudinal stiffening spine (118) of which a longitudinal end is engaged in said housing (122b) of the end-fitting (122'), said spine bearing heating means produced in heating electrical conductor form, of which power supply terminals (134, 136) are situated at said longitudinal end and connected to said electrical connection means (140) of the end-fitting.
